# EUROPEAN PATENT APPLICATION

(11) **EP 0 930 523 A1**
(43) Date of publication of application: **21.07.1999**
(21) Application number: 99100393.0
(22) Date of filing: 18.01.1999
(51) Int. Cl.: G02F 1/1335, G02B 3/00

(54) **Liquid crystal display device**

(30) Priority: 19.01.1998 JP 728998
(71) Applicant: Matsushita Electronics Corporation, Takatsuki-shi, Osaka 569-1193 (JP)
(72) Inventor: Tamura, Hiroshi, Minoo-shi, Osaka 562-0004 (JP); Ozaki, Masayoshi, Amagasaki-shi, Hyogo 661-0002 (JP)
(74) Representative: VOSSIUS & PARTNER

(57) **Abstract**

A liquid crystal display device of the present invention comprises a device substrate (14) having a principal planar surface (hereafter referred to as a "first principal planar surface"), an opposed substrate (13) having a principal planar surface (hereafter referred to as a "second principal planar surface"), and a liquid crystal layer (6) and a sealing material (7) sealed between the device substrate (14) and the opposed substrate (13). The device substrate (14) has TFT pixels (10) on the first principal planar surface. On the other hand, the opposed substrate (13) has microlenses (2) formed on the second principal planar surface, spacers (3) that are formed on the second principal planar surface and are arranged around the microlenses (2), and a cover glass (a cover body) (5) provided on the microlenses (2) and the spacers (3). Thus, a difference in level at the boundary between the display screen area and the other area is avoided, and the spacers (3) can support the cover glass (5) against the stress in the thickness direction, thus lessening swelling or distortion produced in the cover glass (5). As a result, a liquid crystal display device in which less image-display irregularity can be found throughout a screen can be obtained.

## Description

The present invention relates to a liquid crystal display device used for a display, a projection display unit and the like.

The demand for liquid crystal display devices as a direct-view display device as well as a projection display device used for a projection TV or the like has been increasing. When using a liquid crystal display device as a projection display device, the brightness of the liquid crystal display device is particularly important. The greatest factor deciding the brightness of the liquid crystal display device is a numerical aperture of pixels. Conventionally, in order to improve the numerical aperture of pixels effectively, a technique of forming microlenses on one of the substrates of a liquid crystal display device has been known (Publications of Unexamined Japanese Patent Applications Tokkai Sho 60-165621, 60-165622, 60-165623, and 60-165624).

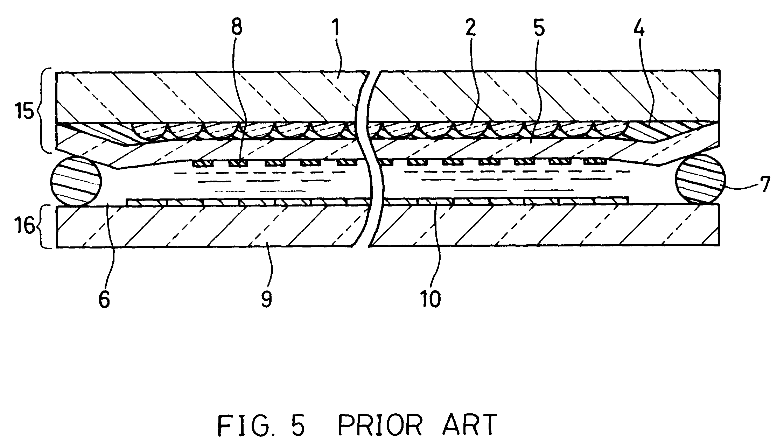

As a technique of forming microlenses in an opposed substrate of a liquid crystal display device, the techniques disclosed in Publications of Unexamined Japanese Patent Applications Tokkai Hei 3-248125 and 7-225303 have been known. A conventional liquid crystal display device comprises a liquid crystal layer 6 and a sealing material 7 sealed between an opposed substrate 15 and a device substrate 16 as shown in FIG. 5. The opposed substrate 15 comprises a second transparent substrate 1, microlenses 2 formed on the second transparent substrate 1, a cover glass 5 provided on the microlenses 2, and black matrices 8 formed on the cover glass 5. Convex parts of the microlenses 2 and the cover glass 5 are bonded with an adhesion layer 4. Thin film transistor (hereafter referred to as "TFT") pixels 10 are formed on a first transparent substrate 9. A display screen (not shown in the figure) is formed by arranging the TFT pixels 10 in a matrix form. The microlenses 2 and the TFT pixels 10 are arranged with a one-to-one correspondence. The microlenses 2 are not formed in any area other than a display screen.

When manufacturing such a liquid crystal display device, the flatness of the liquid crystal layer 6 is important. The liquid crystal layer 6 has a thickness of about 4µm, and the tolerance of its unevenness on a plane parallel to a display screen is about 0.5µm. When the unevenness exceeds the tolerance, image-display irregularity is caused by the effect of birefringence of the light transmitted through the liquid crystal layer 6.

However, the above-mentioned conventional method causes the following problems.

Since no microlens 2 is formed in the area other than the display screen of the liquid crystal display device, the thickness of the opposed substrate 15 in the display screen area is different from that in the other area, thus causing differences in level at the boundary between the display screen area and the other area. The difference in level causes swelling of the cover glass 5 near the boundary between the display screen area and the other area.

The thickness of the cover glass 5 is decided by a focal length of the microlenses 2. When the focal length of the microlenses 2 is about 100µm, the cover glass 5 has a thickness of about 100µm.

Generally, when applying stress to a flat plate made of borosilicate glass with a thickness of 100µm perpendicularly, a stress of 0.3kgf causes a distortion of 1µm in the flat plate. In a conventional liquid crystal display device, microlenses with a height of 5-10µm are used. Therefore, stress is applied to the cover glass 5 perpendicularly at the boundary between the display screen area and the other area. The application of pressure for pressing work and high-speed rotation of substrates that is conducted in processes of manufacturing a liquid crystal display device results in several kgf of stress to the cover glass 5. Consequently, distortion of the cover glass 5 near the boundary between the display screen area and the other area reaches at least 10µm, and accordingly the height of a swell reaches several µm. Then, the nonuniformity in width of gaps (not shown in the figure) between the opposed substrate 15 and the device substrate 16 near the boundary between the display screen area and the other area in a liquid crystal display device reaches several µm. As a result, the unevenness in the thickness of the liquid crystal layer 6 reaches several µm, which greatly exceeds the unevenness tolerance of 0.5µm on a plane parallel to the display screen. Consequently, an image-display irregularity is caused near the boundary between the display screen area and the other area. Actually, a liquid crystal display device had a defective rate (hereafter referred to as a "gap defective rate") reaching 80% due to the nonuniformity in gap width between the opposed substrate 15 and the device substrate 16.

The present invention provides a liquid crystal display device in which no image-display irregularity is caused near the boundary between a display screen area and the other area.

A liquid crystal display device of the present invention comprises a first substrate having a first principal planar surface, a second substrate having a second principal planar surface opposing the first principal planar surface, and a liquid crystal layer sealed between the first substrate and the second substrate. The first substrate has a thin film transistor on the first principal planar surface. The second substrate has optical elements formed on the second principal planar surface, spacers that are formed on the second principal planar surface and are arranged around the optical elements, and a cover body. The optical elements and the spacers are arranged between the second principal planar surface and the cover body.

According to this configuration, a difference in level at the boundary between a display screen area and the other area can be avoided, thus eliminating stress applied to the cover body. As a result, the unevenness in the thickness of the liquid crystal layer can be maintained below the tolerance. Thus, a liquid crystal display device in which less image-display irregularity is found throughout the screen can be obtained.

In the configuration described above, it is preferable that the height of the spacers is equal to or higher than that of the optical elements. According to the preferable configuration, a difference in level at the boundary between the display screen area and the other area can be avoided, thus obtaining a liquid crystal display device in which less image-display irregularity is found throughout the screen.

In the configuration described above, it is preferable that the height of the spacers is set so that the inplane unevenness in the thickness of the liquid crystal layer is 0.5µm or less. According to the preferable configuration, the inplane unevenness in the thickness of the liquid crystal layer can be maintained within the tolerance for preventing the image-display irregularity from being generated.

In the configuration described above, it is preferable that the optical elements and the spacers are made of photosensitive resin that transmits visible light. According to the preferable configuration, the optical elements and the spacers can be formed by exposure at the same time, thus simplifying the manufacturing process. From the same viewpoint, the configuration is preferable, since the resin can be applied at the same time when the optical elements and the spacers are made of the same photosensitive resin.

Further, in the configuration described above, it is preferable that the spacers have the same shape as that of the optical elements. According to the preferable configuration, opening shapes of a mask used in forming the spacers and the optical elements by exposure can be made identical, thus simplifying the mask shape.

In addition, in the configuration described above, it is preferable that the second substrate or the cover body has a property of transmitting ultraviolet rays. According to the preferable configuration, ultraviolet curable resin can be used as an adhesive between the second substrate and the cover body, and the adhesive can be hardened by irradiating ultraviolet rays from the side of the second substrate or the cover body. Further, it is preferable that both have a property of transmitting ultraviolet rays, since ultraviolet curable resin can be used as a sealing compound for sealing the liquid crystal layer and thus the sealing compound can be hardened by irradiating ultraviolet rays from the side of the second substrate. Similarly, it is preferable that the first substrate has a property of transmitting ultraviolet rays, since ultraviolet curable resin can be used as a sealing compound for sealing the liquid crystal layer and thus the sealing compound can be hardened by irradiating ultraviolet rays from the side of the first substrate.
FIG. 1 is a front cross-sectional view of a liquid crystal display device of an embodiment according to the present invention.
FIG. 2 is a plan view of the liquid crystal display device of an embodiment according to the present invention.
FIGS. 3(a)-(e) illustrate a manufacturing process view for the liquid crystal display device of an embodiment according to the present invention.
FIG. 4 is a view showing a mask pattern used in manufacturing the liquid crystal display device of an embodiment according to the present invention.
FIG. 5 is a front cross-sectional view of a conventional liquid crystal display device.

### Embodiment

An embodiment of the present invention will be explained with reference to the drawings as follows.

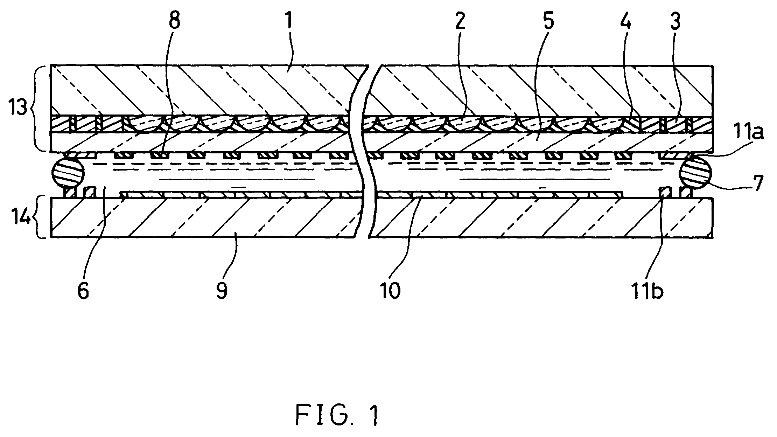

As shown in FIG. 1, a liquid crystal display device of an embodiment according to the present invention comprises a device substrate 14 having a principal planar surface (hereafter referred to as a "first principal planar surface"), an opposed substrate 13 having a principal planar surface (hereafter referred to as a "second principal planar surface") opposing the first principal planar surface, and a liquid crystal layer 6 and a sealing material 7 sealed between the device substrate 14 and the opposed substrate 13. The device substrate 14 has a quartz glass substrate 9 as a base, and comprises TFT pixels 10 formed of amorphous silicon and second positioning marks 11b on the first principal planar surface. On the other hand, the opposed substrate 13 comprises a glass substrate 1 made of borosilicate glass, microlenses 2 that are formed on the second principal planar surface and are arranged in a matrix form, spacers 3 that are formed on the second principal planar surface and are arranged around the microlenses 2, a cover glass (a cover body) 5 provided on the microlenses 2 and the spacers 3, black matrices 8 formed on the cover glass 5 in the side contacting with the liquid crystal layer 6, and first positioning marks 11a formed around the black matrices 8. The second principal planar surface of the glass substrate 1 and the cover glass 5 are bonded with an adhesion layer 4.

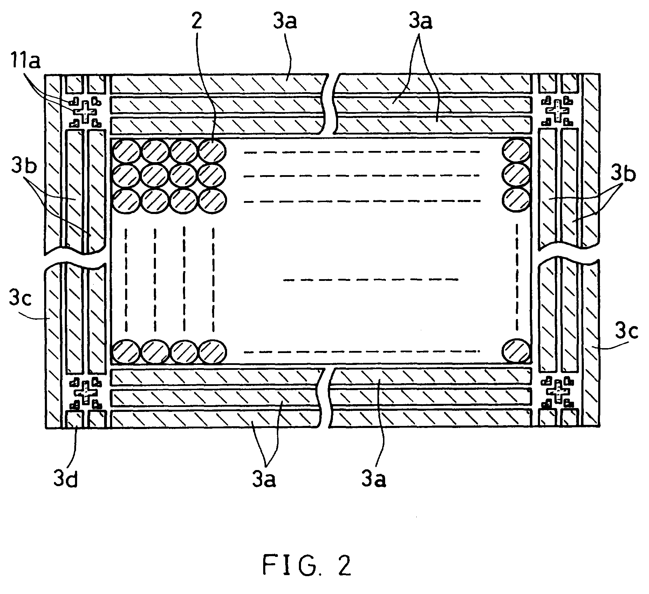

The microlenses 2 are made of acrylic resin and have an elliptical shape with a longer axis of 18µm, a shorter axis of 15µm, and a height of 10µm. As shown in FIG. 2, the spacers 3 comprise 6 stripe-like first spacers 3a, 4 stripe-like second spacers 3b, 2 stripe-like third spacers 3c, and 8 square fourth spacers 3d. Each first spacer 3a has a length of 16mm, a width of 1mm, and a height of 10µm. Each second spacer 3b has a length of 10mm, a width of 1mm, and a height of 10µm. Each third spacer 3c has a length of 20mm, a width of 1mm, and a height of 10µm. Each fourth spacer 3d has a side length of 1mm and a height of 10µm. A display screen (not shown in the figure) is formed by arranging the TFT pixels 10 in a matrix form. The microlenses 2 and the TFT pixels 10 are arranged with a one-to-one correspondence.

According to a liquid crystal display device of the embodiment of the present invention, since the spacers 3 having the same height as that of the microlenses 2 are provided around the microlenses 2, a difference in level at the boundary between the display screen area and the other area is avoided, thus decreasing the stress applied to the cover glass 5 compared to that in a conventional liquid crystal display device. As a result, a liquid crystal display device with less image-display irregularity throughout the screen can be obtained.

Next, a method of manufacturing a liquid crystal display device of the present invention will be explained as follows.

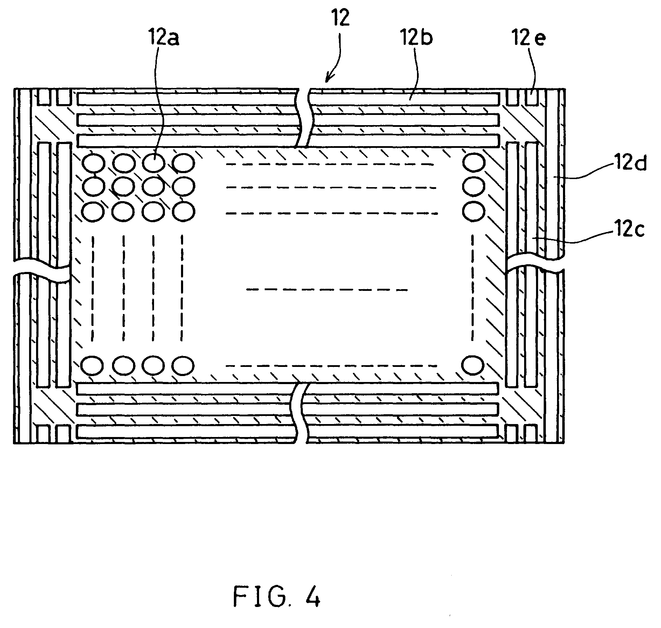

As a first step, a photosensitive acrylic resin film with a refractive index of 1.5 is applied on a washed glass substrate made of borosilicate glass with a thickness of 1mm by a spin coating method so as to have a thickness of 10µm. Then, a mask 12 shown in FIG. 4 is placed on the surface of the acrylic resin film, and then by irradiating ultraviolet rays, portions of the acrylic resin film that are not covered with the mask 12 can be hardened. The mask 12 has elliptical holes 12a with a longer axis of 18µm and a shorter axis of 15 µm and 600 and 800 holes 12a are arranged in the longitudinal and horizontal directions respectively in a matrix form. Further, 6 stripe-like openings 12b, 4 stripe-like openings 12c, 2 stripe-like openings 12d, and 8 square openings 12e are arranged around the holes 12a. Each opening 12b has a length of 16mm and a width of 1mm. Each opening 12c has a length of 10mm and a width of 1mm. Each opening 12d has a length of 20mm and a width of 1mm. Each opening 12e has a side length of 1mm.

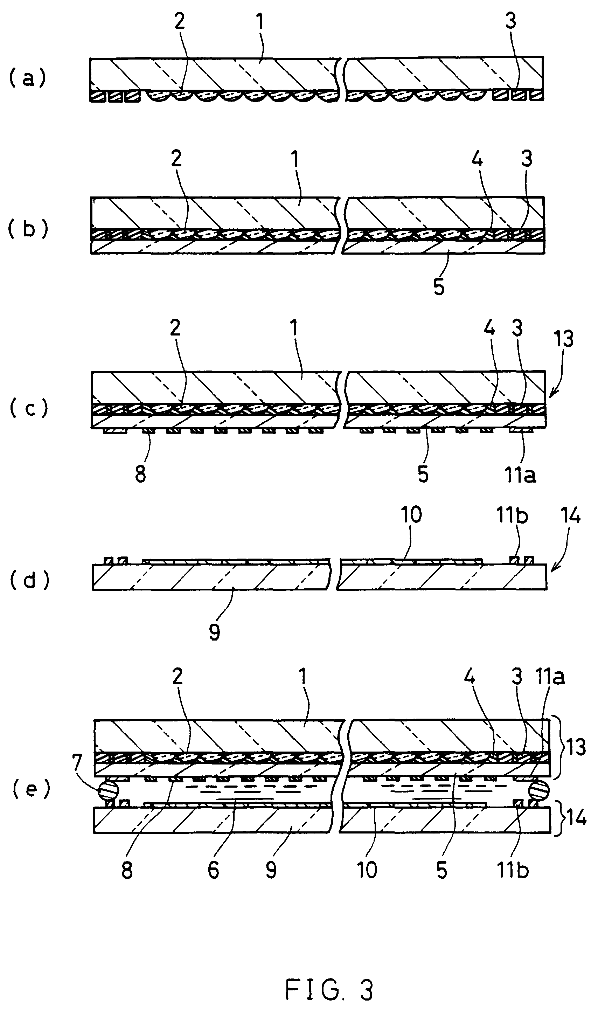

As a next step, the borosilicate glass substrate is washed with an organic solvent and portions of the acrylic resin film that are not irradiated with ultraviolet rays are removed. Then, the glass substrate 1 is heated to 300°C, thereby melting the portions of the acrylic resin film that have been hardened by being irradiated with ultraviolet rays. Thus microlenses 2 and spacers 3 are formed (FIG. 3(a)). After that, by a spin coating method, an adhesion layer 4 made of fluorine-added acrylic resin with a refractive index of 1.35 is applied onto the surface on the microlenses 2 side of the glass substrate 1 on which the microlenses 2 and the spacers 3 have been formed so as to have a thickness of 10µm. Then, a cover glass 5 made of borosilicate glass with a thickness of 10µm and a refractive index of 1.45 is placed over the adhesion layer 4 and is bonded by applying pressure. Ultraviolet rays are irradiated from the surface of the cover glass 5, thus hardening the adhesion layer 4 (FIG. 3(b)).

Then, black matrices 8 having a rectangular opening that are made of chromium and have a width of 5µm and a layer thickness of 120nm and first positioning marks 11a are formed on the surface of the cover glass 5 using a mask (not shown in the figure) by vacuum deposition (FIG. 3 (c)). In this case, the rectangular openings of the black matrices 8 and the microlenses are arranged with a one-to-one correspondence. Thus, an opposed substrate 13 is manufactured.

Further, sealing adhesives 7 are formed on the surface of the opposed substrate 13 on the side of the cover glass 5. With respect to formation positions, the sealing adhesives 7 are formed at positions opposing the spacers 3 in the area outside a display screen. Thus, the spacers 3 can support the cover glass 5 against the stress applied by the sealing adhesives 7, thus restraining swell produced in the cover glass 5.

Next, TFT pixels 10 formed of polysilicon and electrodes are arranged on a quartz glass substrate 9 having a thickness of 0.8mm in a matrix form so that 600 and 800 TFT pixels 10 are arranged in longitudinal and horizontal directions respectively. In this case, each array of the TFT pixels 10 and each array of the microlenses 2 are arranged with a one-to-one correspondence (FIG. 3 (d)).

After that, second positioning marks 11b made of chromium having a thickness of 120nm are formed on the quartz glass substrate 9, on which the TFT pixels 10 have been formed, by vacuum evaporation using a mask, thus completing a device substrate 14.

Then, the opposed substrate 13 and the device substrate 14 are positioned opposing each other so that the cover glass 5 and the TFT pixels 10 oppose each other. In order to adjust the positions of the microlenses 2 and the TFT pixels 10, the positions of the first positioning marks 11a and the second positioning marks 11b are observed. Thus, the opposed substrate 13 and the device substrate 14 are bonded so as to be at predetermined positions. In this case, the distance between the surface of the cover glass 5 and the surfaces of the TFT pixels 10 is set to 4.2µm.

As a last step, the sealing adhesives 7 are hardened by irradiating with ultraviolet rays from the side of the glass substrate 1 of the opposed substrate 13. Then, a liquid crystal layer 6 is sealed between the opposed substrate 13 and the device substrate 14, thus completing a liquid crystal display device (FIG. 3 (e)).

In a liquid crystal display device of this embodiment, the thickness of the liquid crystal layer 6 and the unevenness in its thickness on a plane parallel to a display screen were measured by a suitable ellipsometer. As a result, the distance between the surface of the cover glass 5 and the surfaces of the TFT pixels 10 was 4.2 ± 0.2µm. Thus, it was confirmed that the unevenness on a plane parallel to the display screen was within the tolerance of 0.5µm. As a result, it was found that no image-display irregularity throughout the liquid crystal display device was caused. The gap defective rate was 1% or less.

In the embodiment described above, the same effect can be obtained even in the case of the following replacements.

As the glass substrate 1, a glass substrate, a single crystal substrate, or the like that transmits ultraviolet rays, such as a crystallized glass substrate, a quartz glass substrate, or a sapphire substrate, may be used. When a substrate 9 on which the TFT pixels 10 are formed is a substrate that transmits ultraviolet rays such as a quartz glass substrate, a substrate that does not transmit ultraviolet rays may be used instead of the borosilicate glass substrate 1. In this case, ultraviolet rays can be irradiated from the side of the quartz glass substrate 9 for hardening the sealing adhesives 7.

Instead of the quartz glass substrate 9, a sapphire substrate or the like may be used.

As the cover glass 5, a glass substrate, a single crystal substrate, or the like that transmits ultraviolet rays, such as a crystallized glass substrate, a quartz glass substrate, or a sapphire substrate, may be used.

Suitable photosensitive resin or glass that transmits visible light may be used as the material forming the microlenses 2.

The microlenses 2 may have any shape such as rectangle, circle, or hexagon.

As a method of manufacturing the microlenses 2, an ion exchange method, a swelling method, a machining method, or the like may be employed.

The same effect can be obtained even in the case of using microprisms, micromirrors or the like instead of the microlenses 2.

Any arrangement of the microlenses 2 is possible as long as images can be displayed on a display screen. Further, each array of the microlenses 2 and each array of the TFT pixels 10 may be arranged without a one-to-one correspondence.

Any suitable photosensitive resin that transmits visible light may be used as the material forming the spacers 3. Each material of microlenses 2 and the first to fourth spacers 3a-3d may be different.

The height of the spacers 3 is not limited as long as the height of the spacers 3 is equal to or higher than that of the microlenses 2. The height of the spacers 3 may be lower than that of the microlenses 2, as long as the height of the produced swell does not exceed the tolerance of 0.5µm for the inplane unevenness of a display screen of a liquid crystal display device.

The first to fourth spacers 3a-3d may have any shape such as a cylindrical shape, a beads-string shape, or the like as long as the spacers 3a-3d can maintain the cover glass 5. The first to fourth spacers 3a-3d may have the same shape as that of the microlenses 2.

Any suitable photosensitive resin that transmits visible light may be used as the adhesion layer 4 and the sealing adhesives 7.

Any materials can be used for the black matrices 8, the first positioning marks 11a, and the second positioning marks 11b as long as the materials do not transmit visible light.

## Claims

1. A liquid crystal display device comprising:
a first substrate having a first principal planar surface;
a second substrate having a second principal planar surface opposing the first principal planar surface; and
a liquid crystal layer sealed between the first substrate and the second substrate;
wherein the first substrate comprises a thin film transistor on the first principal planar surface, the second substrate comprises optical elements formed on the second principal planar surface, spacers that are formed on the second principal planar surface and are arranged around the optical elements, and a cover body, and the optical elements and the spacers are arranged between the second principal planar surface and the cover body.

2. The liquid crystal display device according to claim 1,
wherein height of the spacers is equal to or higher than that of the optical elements.

3. The liquid crystal display device according to claim 1,
wherein height of the spacers is set so that inplane unevenness in the thickness of the liquid crystal layer is 0.5µm or less.

4. The liquid crystal display device according to any of claims 1 to 3
wherein the optical elements and the spacers are made of photosensitive resin that transmits visible light.

5. The liquid crystal display device according to any of claims 1 to 4,
wherein the spacers have the same shape as that of the optical elements.

6. The liquid crystal display device according to any of claims 1 to 5,
wherein the second substrate has a property of transmitting ultraviolet rays.

7. The liquid crystal display device according to any of claims 1 to 6,
wherein the cover body has a property of transmitting ultraviolet rays.
